Europäisches Patentamt

European Patent Office    (11) Numéro de publication : **0 166 641**

Office européen des brevets    **B1**

(12)    ## FASCICULE DE BREVET EUROPÉEN

(45) Date de publication du fascicule du brevet :
15.06.88    (51) Int. Cl.⁴ : **F 16 K  1/226**, F 16 K  5/06

(21) Numéro de dépôt : 85401062.6

(22) Date de dépôt : 30.05.85

(54) **Dispositif d'étanchéité destine à assurer L'étanchéité amont/aval d'un obturateur.**

(30) Priorité : 28.06.84 FR 8410262

(43) Date de publication de la demande :
02.01.86 Bulletin 86/01

(45) Mention de la délivrance du brevet :
15.06.88 Bulletin 88/24

(84) Etats contractants désignés :
AT BE DE GB IT NL SE

(56) Documents cités :
EP-A- 0 085 555
EP-A- 0 086 314
FR-A- 1 341 251
FR-A- 1 572 497
GB-A- 2 107 436
PATENTS ABSTRACTS OF JAPAN, volume 7, no. 271,
(M-260)(1416) 3 décembre 1983, page 1416, & JP - A -
58 149 474 (TOMOE GIJUTSU KENKYUSHO K.K.) (05-
09-183)

(73) Titulaire : APPLICATIONS MECANIQUES ET ROBI-
NETTERIE INDUSTRIELLE A.M.R.I. Société anonyme
dite:
Les Mercuriales 40, rue Jean Jaurès
F-93176 Bagnolet Cédex (FR)

(72) Inventeur : Laulhe, René
17, rue des Cîmes
Bidos F-64400 Oloron Sainte Marie (FR)
Inventeur : Garrigues, Jean-claude
Buziet
F-64680 Ogeu Les Bains (FR)

(74) Mandataire : Marquer, Francis et al
CABINET MOUTARD 35, avenue Victor Hugo Résidence Champfleury
F-78180 Voisins-le-Bretonneux (FR)

## Description

La présente invention concerne un dispositif d'étanchéité destiné notamment à assurer l'étanchéité amont/aval d'un obturateur.

Elle s'applique plus particulièrement aux obturateurs du type comprenant un organe d'obturation mobile à l'intérieur d'un corps tubulaire et comportant, à sa périphérie, une surface d'étanchéité venant porter, en fin de course d'obturation, sur une garniture d'étanchéité circulaire et ce, au terme d'un déplacement tangent ou parallèle à l'axe principal de symétrie de ladite garniture d'étanchéité.

L'invention convient également aux obturateurs dans lesquels, selon un montage inverse, l'alésage du corps comprend une surface d'étanchéité sensiblement conique et l'organe d'obturation porte, à sa périphérie, une garniture assurant une étanchéité statique avec l'organe d'obturation et une étanchéité dynamique avec ladite surface d'étanchéité.

Il s'avère donc que dans ces types d'obturateurs, la garniture d'étanchéité doit satisfaire à de multiples fonctions. Elle doit à la fois assurer l'étanchéité statique, l'étanchéité dynamique ainsi que la continuité de l'étanchéité entre l'étanchéité statique et l'étanchéité dynamique.

Ces fonctions d'étanchéité sont particulièrement délicates à obtenir notamment dans le cas où, en raison des conditions de fonctionnement de l'obturateur, la garniture d'étanchéité doit à la fois être réalisée en un matériau mou capable de s'adapter à l'état de surface de la portée du siège afin d'assurer la meilleure étanchéité, en matériau dur et rigide capable de résister aux efforts mécaniques dus à la pression de contact garniture/siège et à la pression du fluide à étancher, et suffisamment flexible pour permettre des déplacements relatifs, organe d'obturation/corps sans nuire à l'étanchéité.

En effet, dans le cas où, en position de fermeture de l'obturateur, la surface d'étanchéité de l'organe d'obturation ne se trouve pas exactement centrée sur la portée d'étanchéité dynamique de la garniture, celle-ci ne se trouve pas uniformément comprimée, de sorte que l'on n'obtient pas une étanchéité homogène tout autour de l'obturateur. Dès lors, dans les parties où la garniture se trouve fortement comprimée par l'organe d'obturation, l'obturateur peut résister à des pressions importantes alors que, dans les parties diamétralement opposées à ces dernières, l'étanchéité est douteuse et les risques de fuite à haute pression sont importants.

Pour supprimer ces inconvénients, on a songé à équiper les obturateurs de mécanismes de centrage de l'organe d'obturation par rapport à la garniture d'étanchéité, ces mécanismes intéressant, soit la cinématique de l'obturateur, soit l'obturateur lui-même.

Toutefois, ces solutions sont complexes, peu fiables et entraînent une augmentation considérable du prix de revient des obturateurs.

On a également proposé de réaliser la garniture d'étanchéité sous la forme d'un double joint torique métallique flexible comprenant :

- une première structure de joint torique métallique flexible destinée à assurer l'étanchéité statique avec le corps de l'obturateur,
- une seconde structure de joint torique métallique flexible destinée à assurer l'étanchéité dynamique,
- une membrane radiale réalisée en un matériau élastique reliant les deux structures d'étanchéité en les enveloppant au moins en partie de manière à assurer la continuité de l'étanchéité entre l'étanchéité statique et l'étanchéité dynamique, et à permettre à la fois un autocentrage de la deuxième structure de joint sur la surface d'étanchéité de l'organe d'obturation, et
- un anneau de réaction flottant, monté serré contre la deuxième structure de joint à l'opposé de la zone de cette structure où vient porter la surface d'étanchéité de l'organe d'obturation.

Une telle garniture d'étanchéité qui se trouve décrite dans FR-A-2 398 940 au nom de la Demanderesse pour : « Double joint torique flexible », permet d'obtenir d'excellents résultats notamment dans le cas de vannes ou de robinets destinés à fonctionner dans des conditions (hautes ou basses températures) pour lesquelles l'emploi de garnitures classiques en élastomère se trouve prohibé.

De même, la demande de brevet européen EP-A-86 314 déposée le 15.02.82 propose un dispositif permettant le serrage de ce double joint torique à l'intérieur du corps d'un robinet à papillon.

En outre, on a également proposé par le brevet FR-A-1 572 497 une garniture d'étanchéité faisant intervenir un joint annulaire coopérant avec la surface d'étanchéité de l'organe d'obturation et associé au corps du robinet par l'intermédiaire d'une structure métallique mince déformable élastiquement par flexion.

L'invention a plus particulièrement pour objet d'étendre le concept d'autocentrage des garnitures d'étanchéité précédemment évoquées à une garniture d'étanchéité métallique présentant une structure simplifiée et qui puisse se monter à l'intérieur du corps du robinet grâce à un dispositif de serrage tel que celui qui se trouve décrit dans le brevet EP-A-86 314 précité.

Elle propose donc un dispositif d'étanchéité pour l'étanchéité amont/aval d'un obturateur du type comprenant :

- un corps tubulaire comportant un alésage présentant un épaulement à flanc abrupt,
- un organe d'obturation mobile à l'intérieur de l'alésage du corps et comportant, à sa périphérie, une surface d'étanchéité de forme conoïde,
- une garniture d'étanchéité sur laquelle vient porter la surface d'étanchéité de l'obturateur en fin de course d'obturation, cette garniture d'étanchéité comportant un élément annulaire d'étanchéité dynamique présentant un faible module d'élasticité à la traction le long de sa circonférence et un diamètre intérieur sensiblement égal au diamètre moyen de la surface d'étanchéité de l'organe d'obturation et une membrane métallique coronale comportant une bordure intérieure reliée de façon étanche audit élément annulaire et une bordure extérieure présentant une partie plane radiale venant s'appliquer contre le flanc abrupt de l'épaulement d'alésage du corps en vue d'assurer une étanchéité statique avec celui-ci, et

- un dispositif de serrage monté à l'intérieur dudit alésage et conçu pour serrer axialement, de façon homogène, la partie plane de la membrane, pour réaliser ladite étanchéité statique, le susdit flanc abrupt formant avec le dispositif de serrage une gorge annulaire dans laquelle l'élément annulaire est radialement guidé et axialement retenu, tandis que la partie centrale de la membrane métallique est conformée de manière à assurer une élasticité radiale entre lesdites bordures extérieures et intérieures et, en conséquence, une mobilité radiale de l'élément annulaire.

Selon l'invention, ce dispositif est plus particulièrement caractérisé en ce que le susdit élément annulaire d'étanchéité est en métal massif et présente une section sensiblement en forme de Z et comporte une partie annulaire intérieure de section sensiblement rectangulaire, une partie annulaire extérieure axialement décalée par rapport à la partie annulaire intérieure, du côté opposé à l'organe d'obturation et une partie de liaison, sensiblement conique reliant la partie annulaire extérieure à la partie annulaire intérieure, et en ce que la susdite membrane est soudée par sa bordure intérieure à une face radiale de la partie annulaire intérieure de l'élément annulaire d'étanchéité, située du côté opposé à ladite partie extérieure.

Un mode de réalisation de l'invention sera décrit ci-après, à titre d'exemple non limitatif, avec référence aux dessins annexés dans lesquels :

La figure 1 est une coupe axiale schématique d'un robinet à papillon pouvant être équipé d'un dispositif d'étanchéité selon l'invention.

La figure 2 est une coupe axiale à plus grande échelle du détail de la figure 1, mettant en relief le dispositif d'étanchéité selon l'invention.

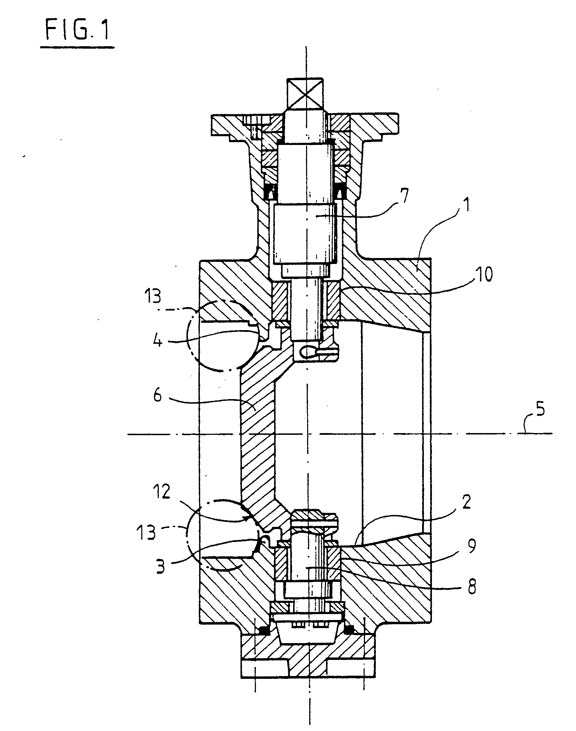

Avec référence à la figure 1, le robinet à papillon comprend d'une façon classique :

- d'une part, un corps 1 à alésage central au moins en partie cylindrique 2 muni d'un épaulement d'alésage 3 qui présente un flanc abrupt 4 situé dans un plan perpendiculaire à l'axe 5 de l'alésage 2, et

- d'autre part, un papillon 6 monté pivotant dans le corps 1 au moyen de deux axes respectifs 7, 8 passant au travers de perçages transversaux 9, 10 prévus dans le corps, et dont l'un (l'axe 7) sert à assurer l'entraînement du papillon 6.

Dans cet exemple, la surface d'étanchéité 12 du papillon 6 (qui consiste en sa tranche) présente une forme sphérique centrée sur l'axe principal de symétrie du papillon 6.

Bien entendu, l'invention ne se limite pas à cette forme sphérique. En effet, cette forme pourrait également être conique ou, d'une façon plus générale, conoïde de révolution, c'est-à-dire constituée par une courbe de révolution dont la génératrice est une courbe appropriée.

Il convient de noter qu'en position fermée du robinet la tranche 12 du papillon 6 vient se disposer sensiblement au droit du flanc abrupt 4 de l'épaulement d'alésage 3 du corps 1.

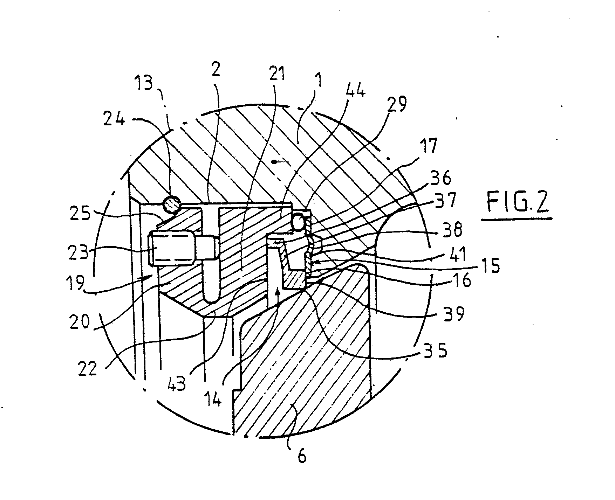

Sur cette figure, le dispositif utilisé pour réaliser l'étanchéité amont/aval du robinet n'a pas été représenté. On a simplement représenté un cercle 13 correspondant à la partie représentée à plus grande échelle sur la figure 2 qui comprend ce dispositif d'étanchéité.

Comme précédemment mentionné, ce dispositif d'étanchéité fait intervenir une garniture d'étanchéité comprenant un élément annulaire d'étanchéité dynamique 14 et une membrane métallique 15 en forme de couronne solidaire par sa bordure intérieure 16 de l'élément annulaire 14 et dont la bordure extérieure présente une partie plane, radiale 17, destinée à être serrée contre le flanc abrupt 4 de l'épaulement d'alésage 3 du corps 1 en vue de réaliser l'étanchéité statique.

Ce serrage de la partie plane 17 de la membrane métallique 15 est assuré au moyen d'une bride circulaire 19 de section en forme de U à ailes épaisses 20, 21, avec une âme 22 relativement mince, et qui présente sa concavité vers la paroi de l'alésage 2.

L'aile 20 de cette bride 19 située du côté opposé à l'épaulement est traversée de part en part par une série de perçages taraudés parallèles à l'axe de l'alésage, dans chacun desquels vient se visser une vis 23 dont l'extrémité vient porter sur la face interne de l'aile 21. L'élément à serrer (la partie plane 17 de la membrane 15) est disposé dans la cavité comprise entre la face extérieure de l'aile 21 et la face abrupte 4 de l'épaulement 3.

Par ailleurs, l'aile 20 de la bride 19 vient prendre appui sur un jonc 24 logé dans une saignée semitorique usinée dans l'alésage 2 du corps 1. La surface de l'aile 20, sur laquelle le jonc 24 vient prendre appui, est conique (chanfrein 25) de manière à assurer le maintien du jonc 24 dans la saignée par la composante radiale des efforts de la bride 19 sur le jonc 24.

Ainsi, en effectuant le serrage des vis 23, on provoque la déformation de la bride 19 qui va légèrement s'ouvrir, l'âme 22 jouant alors le rôle de charnière élastique. Du fait que l'aile 20 se trouve axialement retenue par le jonc 24, l'aile 21 poussée par les vis 23 assure la compression de l'élément à serrer sur la face abrupte 4 de l'épaulement d'alésage 3 du corps 1, par exemple par l'intermédiaire d'un tore élastique 29.

Dans cet exemple, l'élément annulaire d'étanchéité 14 réalisé en métal massif présente une section sensiblement en forme de Z, c'est-à-dire comprenant une partie annulaire intérieure 35 de section sensiblement rectangulaire, une partie annulaire extérieure 36 également rectangulaire mais de plus petite dimension, cette partie annulaire 36 extérieure étant axialement décalée, du côté opposé au papillon 6, et une partie conique 37 reliant la partie annulaire extérieure 35 à la partie annulaire intérieure 36.

Dans ce cas, la membrane 15 présente, dans sa région centrale, une nervuration 38 orientée du côté du papillon 6 (et, en conséquence, de l'épaulement d'alésage 3). Cette membrane est soudée, par sa bordure intérieure 16, à la face radiale 39 de la partie annulaire intérieure 35, située du côté opposé à la partie annulaire extérieure 36.

Pour permettre le passage de l'ensemble formé par l'élément annulaire 14 et la membrane, la face extérieure de l'aile 21 de la bride 19 présente un profil étagé, délimitant avec le flanc abrupt de l'épaulement d'alésage un volume annulaire, dans lequel se trouve logé ledit ensemble. En outre, pour permettre le passage de la nervuration 38 prévue dans la partie centrale de la membrane, le flanc abrupt comprend dans sa région centrale une concavité circulaire 41 orientée axialement.

Ce mode de réalisation présente l'avantage de conférer à la partie annulaire intérieure 35 de l'élément annulaire 14 qui assure l'étanchéité dynamique avec le papillon 6, une mobilité dans le sens radial due à la déformation élastique de la membrane (grâce à la nervuration 38) et une mobilité dans le sens axial par déformation de la partie conique 37 assurant la liaison entre les parties annulaires extérieure 36 et intérieure 35 de l'élément annulaire.

A cet effet, la partie annulaire extérieure 36 de l'élément annulaire 14 se trouve axialement retenue par la face radiale 43 de l'aile 21 de la bride 19, tandis qu'elle peut se déplacer radialement.

**Revendications**

1. Dispositif d'étanchéité pour l'étanchéité amont/aval d'un obturateur du type comprenant :
- un corps tubulaire (1) comportant un alésage (2) présentant un épaulement (3) à flanc abrupt,
- un organe d'obturation (6) mobile à l'intérieur de l'alésage du corps et comportant, à sa périphérie, une surface d'étanchéité de forme conoïde,
- une garniture d'étanchéité sur laquelle vient porter la surface d'étanchéité de l'obturateur en fin de course d'obturation, cette garniture d'étanchéité comportant un élément annulaire d'étanchéité dynamique (14) présentant un faible module d'élasticité à la traction le long de sa circonférence et un diamètre intérieur sensiblement égal au diamètre moyen de la surface d'étanchéité (12) de l'organe d'obturation (6) et une membrane métallique coronale comportant une bordure intérieure (16) reliée de façon étanche audit élément annulaire (14) et une bordure extérieure présentant une partie plane radiale (17) venant s'appliquer contre le flanc abrupt de l'épaulement d'alésage du corps en vue d'assurer une étanchéité statique avec celui-ci, et
- un dispositif de serrage (19) monté à l'intérieur dudit alésage (2) et conçu pour serrer axialement, de façon homogène, la partie plane (17) de la membrane (15), pour réaliser ladite étanchéité statique, le susdit flanc abrupt formant avec le dispositif de serrage une gorge annulaire dans laquelle l'élément annulaire est radialement guidé et axialement retenu, tandis que la partie centrale de la membrane métallique est conformée de manière à assurer une élasticité radiale entre lesdites bordures extérieures (17) et intérieures (16) et, en conséquence, une mobilité radiale de l'élément annulaire, caractérisé en ce que le susdit élément annulaire d'étanchéité (14) est en métal massif et présente une section sensiblement en forme de Z et comporte une partie annulaire intérieure (35) de section sensiblement rectangulaire, une partie annulaire extérieure (36) axialement décalée par rapport à la partie annulaire intérieure (35), du côté opposé à l'organe d'obturation (6) et une partie de liaison (37), sensiblement conique reliant la partie annulaire extérieure (36) à la partie annulaire intérieure (35), et en ce que la susdite membrane (15) est soudée par sa bordure intérieure (16) à une face radiale (39) de la partie annulaire intérieure (35) de l'élément annulaire d'étanchéité (14), située du côté opposé à ladite partie extérieure (36).

2. Dispositif selon la revendication 1, caractérisé en ce que le susdit dispositif de serrage comprend une bride (19) présentant un profil étagé comportant une première face radiale assurant le serrage de la bordure extérieure (17) de la membrane (15) contre le flanc abrupt de l'épaulement d'alésage (3) du corps (1), une deuxième face radiale (43) délimitant avec le flanc abrupt de l'épaulement d'alésage (3) un volume annulaire dans lequel se trouve partiellement logé l'élément annulaire d'étanchéité (14), cette deuxième face radiale (43) servant à retenir axialement la partie annulaire extérieure (36) de l'élément annulaire d'étanchéité (14), et un palier (44) sur lequel vient porter ladite partie annulaire extérieure (36) en fin de course radiale de l'élément annulaire d'étanchéité (14).

3. Dispositif selon l'une des revendications 1 et 2, caractérisé en ce que la partie centrale de la membrane (15) comprend une nervuration (38), et en ce que le flanc abrupt comprend, dans sa région centrale, une concavité circulaire (41) orientée axialement pour loger ladite nervuration (38).

**Claims**

1. A sealing device for the upstream/downstream sealing of a valve of the type comprising :
- a tubular body (1) comprising a bore (2) having a shoulder (3) with steep side,
- a valving member (6) movable inside the bore of the body and comprising at its periphery a sealing surface of a conoid shape,
- a sealing packing on which comes to bear the sealing surface of the valve at the end of the valving stroke, said sealing packing comprising an annular dynamic sealing element (14) having a low modulus of elasticity to traction along its circumference and an inner diameter substantially equal to the mean diameter of the sealing surface (12) of the valving member (6) and a coronal metal membrane comprising an inner edge portion (16) sealingly connected to said annular element (14) and an outer edge portion having a flat radial part (17) applied against the steep side of the bore shoulder of the body so as to provide static sealing therewith, and

- a clamping device (19) mounted inside said bore (2) and adapted for axially clamping in an homogeneous way, the flat part (17) of the membrane (15) so as to provide said static sealing, said steep side forming with the clamping device an annular groove in which the annular element is radially guided and axially retained and the central part of said metal membrane is adapted so as to provide radial elasticity between said outer (17) and inner (16) edge portions and, consequently, radial mobility of said annular element, characterized in that said annular sealing element (14) is made from solid metal having a substantially Z shaped section and comprises an inner annular part (35) with substantially rectangular section, an annular external part (36) axially offset with respect to the annular inner part (35) on the side opposite the valving member (6) and a substantially conical connecting part (37) connecting the outer annular part (36) to the inner annular part (35) and in that said membrane (15) is welded by its inner edge portion (16) to a radial face (39) of the inner annular part (35) of the annular sealing element (14), situated on the side opposite said external part (36).

2. The device as claimed in claim 1, characterized in that said clamping device comprises a collar (19) having a stepped profile with a first radial face ensuring clamping of the outer edge portion (17) of the membrane (15) against the steep side of the bore shoulder (3) of the body (1), a second radial face (43) defining with the steep side of the bore shoulder (3) an annular volume in which said annular sealing element (14) is partially housed, said second radial face (43) serving for axially retaining the outer annular part (36) of said annular sealing element (14), and a bearing surface (44) on which said outer annular part (36) comes to bear at the end of the radial stroke of said annular sealing element (14).

3. The device as claimed in one of claims 1 and 2, characterized in that the central part of said membrane (15) comprises a rib (38) and the steep side comprises, in its central region, a circular concavity (41) orientated axially for housing said rib (38).

**Patentansprüche**

1. Abdichtung zum stromauf- und stromabwärts fluiddichten Verschliessen eines Absperrelementes der Art mit :
- einem röhrenförmigen Körper (1), der eine Bohrung (2) aufweist, welche mit einem Absatz (3) mit steiler Seitenfläche versehen ist,

- einem Absperrelement (6), welches im Inneren der Bohrung des Körpers beweglich ist und auf seinem Umfang eine Abdichtungsfläche konoider Form aufweist,

- einer Dichtungseinlage, auf der die Abdichtungsfläche des Absperrelementes am Ende seines Absperrhubs zur Auflage kommt, wobei besagte Dichtungseinlage ein dynamisches, ringförmiges Abdichtungselement (14) aufweist, mit einem geringen Zugelastizitätskoeffizienten entlang seines Umfangs und einem inneren Durchmesser, der im wesentlichen gleich dem mittleren Durchmesser der Abdichtungsfläche (12) des Absperrelementes (6) ist, und eine kranzförmige Metallmembran mit einem inneren Rand (16), der mit besagtem ringförmigen Element (14) fluiddicht verbunden ist und einem äusseren Rand, der mit einem ebenen Radialabschnitt (17) versehen ist, welcher gegen die steile Seitenfläche des Bohrungsabsatzes des Körpers zur Anlage kommt, um im Verhältnis zu diesem die statische Abdichtung zu ermöglichen und

- einer Klemmvorrichtung (19), die im Inneren der besagten Bohrung (2) angeordnet ist, um den ebenen Abschnitt (17) der Membran (15) gleichmässig axial einzuklemmen, um so besagte statische Abdichtung zu erreichen, wobei die besagte steile Seitenfläche mit der Klemmvorrichtung eine ringförmige Rille bildet, in der das ringförmige Element radial geführt und axial gehalten wird, während der Zentralabschnitt der Metallmembran so ausgebildet ist, dass eine radiale Elastizität zwischen besagten äusseren (17) und inneren (16) Rändern erreicht wird und dementsprechend die radiale Beweglichkeit des ringförmigen Elementes, dadurch gekennzeichnet, dass besagtes ringförmiges Abdichtungselement (14) aus massivem Metall ist, mit einem im wesentlichen Z-förmigen Schnitt und einen inneren ringförmigen Teil (35) mit im wesentlichen rechteckigem Schnitt besitzt, einen äusseren ringförmigen Teil (36), welcher im Verhältnis zum inneren ringförmigen Teil (35) axial verschoben ist, auf der dem Absperrelement (6) entgegengesetzten Seite und ein im wesentlichen kegelförmiges Verbindungsteil (37), welches den äusseren ringförmigen Teil (36) mit dem inneren ringförmigen Teil (35) verbindet und dass besagte Membran (15) mit ihrem inneren Rand (16) auf eine dem besagten äusseren Teil (36) gegenüberliegende Radialfläche (39) des inneren ringförmigen Teils (35) des ringförmigen Abdichtungselementes (14) geschweisst ist.

2. Abdichtung nach Anspruch 1, dadurch gekennzeichnet, dass besagte Klemmvorrichtung einen Flansch (19) aufweist, mit einem abgesetzten Profil, welches eine erste Radialfläche aufweist, zur Einklemmung des äusseren Randes (17) der Membran (15) gegen die steile Seitenfläche des Bohrungsabsatzes (3) des Körpers (1), wobei eine zweite Radialfläche (43) mit der steilen Seitenfläche des Bohrungsabsatzes (3) einen ringförmigen Freiraum begrenzt, der teilweise das ringförmige Dichtungselement (14) aufnimmt, wobei besagte zweite Radialfläche (43) dazu dient, den äusseren ringförmigen Teil (36) des ringförmigen Dichtungselementes (14) axial zu haltern, sowie ein Lager auf dem besagter äusserer ringförmiger Teil (36) am Ende des Radialhubs des ringförmigen Dichtungselementes (14) aufliegt.

3. Abdichtung nach einem der Ansprüche 1 und 2, dadurch gekennzeichnet, dass der Zentralteil der Membran (15) eine Rippe (38) aufweist und dass die steile Seitenfläche in ihrer zentralen Zone eine kreisförmige Vertiefung (4) aufweist, die, zur Aufnahme der besagten Rippe (38) axial ausgerichtet ist.

## FIG. 1

FIG.2